# EUROPEAN PATENT APPLICATION

(11) **EP 2 679 544 A1**
(43) Date of publication of application: **01.01.2014**
(21) Application number: 13171509.6
(22) Date of filing: 11.06.2013
(51) Int. Cl.: C01G 45/02

(54) **Spherical trimanganese tetroxide with low BET specific surface area and the method for preparation thereof**

(30) Priority: 26.06.2012 CN 201210213185
(71) Applicant: Shenzhen Xinhaoqing Science and Technology Co., Ltd., 518131 Shenzhen Guangdong (CN)
(72) Inventor: WU, Xiaojing, Shenzhen Guangdong 518131 (CN)
(74) Representative: Croce, Valeria

(57) **Abstract**

The present invention provides a spherical trimanganese tetroxide with low BET specific surface area and preparation method thereof. The preparation method of the present invention comprises: (1) pre-treatment process, adding MnS and peroxide to MnSO₄ solution whose concentration is 130∼200g/L to remove impurities, and then, neutralizing and separating by solid-liquid separation to obtain manganese sulfate filtrate; (2) oxidation reaction process, putting the filtrate in a reactor, maintaining the temperature of the solution at 25∼30°C, spraying the filtrate through the spray nozzle, mixing the sprayed manganese sulfate filtrate with a mixture gas of oxygen and ammonia gas to carry out reaction on the spraying interface at under a pressure of 500∼1000mm H₂O, reacting until [Mn²⁺]≤1.5g/L, the gas mol ratio is O₂/NH₃=1/12; (3) process for obtaining the final product, separating the solution obtained after reaction by solid-liquid separation to obtain solid and nitrate, washing and drying the solid to obtain Mn₃O₄ product. The trimanganese tetroxide of the present invention has properties that particle size distribution is narrow, the crystal phase is pure, impurities content is low, Mn% is 71.44∼71.08wt%, BET specific surface area is less than 1m²/g, D₉₀ is 7.0∼₈.5µm, D₁₀ is 2.6∼3.2µm, D₅₀ is 4.0∼5. 5µm, and Dₘₐₓ is 1.5.138µm.

## Description

### Technical field

The present invention relates to a method for preparing spherical trimanganese tetroxide with low BET specific surface area, and the spherical trimanganese tetroxide produced by the method.

### Background art

Trimanganese tetroxide raw material is commonly used for preparation of manganese cathode materials for lithium ion secondary battery, which requires the trimanganese tetroxide raw material possess the properties of small specific surface area, low impurity content, spherical particle, pure crystalline phase structure and so on. Recently, with increase of the rate performance requirement for lithium ion secondary battery, there are further requirements for particle size distribution of the trimanganese tetroxide.

A method for preparing Mn₃O₄ by adding aqua ammonia into MnSO₄/H₂O solution is disclosed in CN1814551A. In this method, the oxidation rate of divalent manganese and the recovery rate of manganese are largely increased, but it can not be ensured to obtain pure phase Mn₃O₄, meanwhile, because the physical indexes such as particle size distribution, specific surface area and so on, are not studied and technically controlled during the process for preparing Mn₃O₄, the obtained Mn₃O₄ is not suitable for preparing LMO (lithium manganate) materials.

### Summary of the invention

Aqua ammonia is a monobasic weak base, the dissociation constant of which is 1.8 × 10⁻⁵. Besides, Mixing aqua ammonia with MnSO₄ can obtain a buffer solution, and the pH value of the buffer solution is far less than 14. After studying relationship between electric potential and pH value of Mn∼H₂O system, the inventor confirms that Mn can be oxidized to be Mn₃O₄ with air or oxygen oxidation only when the pH value is 6.4∼7.64, no Mn₃O₄ will be produced when the pH value is less than 6.4, meanwhile, and a large quanity of Mn(OH)₂ may be produced when pH value is too high. Because electric potential of oxygen is much higher than electric potential that Mn(OH)₂ is oxidized to Mn₃O₄, Mn(OH)₂ will be oxidized to Mn₂O₃, which leads to phenomenon of mischcrystal and thus the quality of Mn₃O₄ is reduced.

The patent publication No. 101898796A discloses a method for preparing Mn₃O₄ with MnSO₄/H₂O/NH₄OH/air system. In the method, pH value of MnSO₄ solution with the concentration of 50∼120g/L is controlled between 4.5∼8.0, and the MnSO₄ solution is directly oxidized with air at 50∼80°C to produce Mn₃O₄ with properties that tap density is1.95∼2.25g/cm³, BET is 1.9419∼2.9015m²/g, D₅₀ is 7.21∼10.72µm. According to disclosure of paragraph [0009] in its description "a certain amount of supplementary manganese sulfate solution may be added as needed······, ······until the content of Mn reaches 70.5%" as well as the disclosure of example 1, it can be concluded that the required content of Mn can not be acquired at a time by this method, so there is a need to supplement MnSO₄ to carry out oxidation-reduction reaction, thus which leads that particles can grow in a second time and D₅₀ increases, therefore the demands for preparing spherical Mn₃O₄ with small particle size, narrow distribution, pure phase and high rate of charge-discharge performance cannot be fulfilled. Meanwhile, its BET is also far larger than the current international standard of less than 1m²/g.

The technical problem solved by the present invention is overcoming the shortcomings of the prior art, providing a method for preparing spherical high-purity Mn₃O₄ with D₅₀ of 4.5∼5.5µm and BET< 1.0 m²/g.

Particularly, as disclosed in CN101898796A, supplementary MnSO₄ is needed to be added for reacting so that the content of Mn may reach 70.5%, the essential reason of which is that technical means of controlling redox potential are lacked, part of Mn₂O₃ is produced and thus Mn% decreases. In order to solve the technical problem that D₅₀ increases due to supplementary MnSO₄, MnSO₄ solution with high concentration is utilized in the present invention, so (NH₄)₂SO₄ with higher concentration is generated after reaction and higher ion strength is formed, thus redox potential is stablized, therefore, Mn₃O₄ with low particle size can be produced, which increase rate charge and discharge performance of battery, at the same time, the content index of Mn in Mn₃O₄ can be assured.

Generally speaking, specific surface area of solid particle increases with the decrease of D₅₀. Trimanganese tetroxide obtained in Example 1 of CN101898796A has BET of 1.9419 m²/g and D₅₀ of 8.42 µm, large internal surface area exists comparing with the theoretical density of 4.50 g/cm³, this may be caused by reaction temperature, controlling of reaction rate and small particles agglomerating when of NH₄OH is added and partial filtratian is carried out. In the present invention, lower reaction temperature and technology of gas phase isostatic pressure as well as interfacial reacting when MnSO₄ solution is sprayed are applied, so that powder distribution of the Mn₃O₄ is improved, and Mn₃O₄ product with small particle size, narrow distribution and low BET is produced.

More particularly, the present invention provides following technical solution to solve the above technical problem existing in the prior art.

A method for preparing spherical trimanganese tetroxide, characterized in that it comprises following processes:

### (1) Pre-treatment process

MnS and peroxide are sequentially added to MnSO₄ solution whose concentration is 130∼200g/L to remove impurities, and the mixture is neutralized to pH value of 5.0∼5.5, and then the mixture is separated by solid-liquid separation to obtain manganese sulfate filtrate;

### (2) Oxidation reaction process

The manganese sulfate filtrate obtained in the process (1) is reacted in a reactor and is sprayed through the spray nozzle of the reactor, the sprayed manganese sulfate filtrate is mixed with a mixture gas of oxygen and ammonia gas introduced into the reactor to carry out reaction on the spraying interface at the pressure range of 500∼1000mm H₂O, and the reaction will not stop until [Mn²⁺]≤1.5g/L in the reaction solution, wherein, the manganese sulfate filtrate is cooled and maintained at a temperature range of 25∼30°C to carry out circulation reaction on the spraying interface, besides, gas mol ratio of oxygen to ammonia gas is O₂/NH₃=1/12;

### (3) Process for obtaining the final product

The solution obtained after reaction in process (2) is separated by solid-liquid separation to obtain solid and filtrate, NH₃ is recovered from the filtrate, the solid is washed with deionized water, and then the solid is dried to obtain Mn₃O₄ product.

Wherein, in process (1), MnS is added to carry out reaction according to the proportion of 2.5∼3.0 kg of MnS per cubic meter of solution.

Wherein, in process (1), after MnS is added, and the mixture is reacted under agitation for 3∼4h at 90∼95°C.

Wherein, in process (1), when said peroxide is barium peroxide, barium peroxide is added to the solution according to the proportion of 1.5∼2.2 kg per cubic meter of solution and impurities are removed with oxidation reaction under the condition that the mixture is boiling; when said peroxide is hydrogen peroxide, hydrogen peroxide is added to the solution according to 2.5L of 27.5wt% hydrogen peroxide per cubic meter of solution and impurities are removed with oxidation reaction under the condition that the mixture is boiling.

Wherein, in process (3), CaO is added to the filtrate to recover NH₃.

Wherein, the solid is washed with deionized water at a temperature of 70∼80°C according to the weight ratio of solid to liquid of :5.

Wherein said drying is maintained for 23∼26 hours at a temperature range of 100∼ 110°C, preferably drying is maintained for 24 hours at 105°C.

The present invention also provides a spherical trimanganese tetroxide product prepared by the above methods of the present invention.

The spherical trimanganese tetroxide product of the present invention has properties that BET specific surface area is less than 1m²/g, D₉₀ is 7.0∼8.5µm, D₁₀ is 2.6∼3.2µm and D₅₀ is 4.0∼5.5µm.

More preferably, the spherical trimanganese tetroxide product of the present invention has properties that BET specific surface area is 0.7122∼0.8214m²/g, D₉₀ is 7.029∼ 8.456µm, D₁₀ is 2.626∼3.139µm, D₅₀ is 4.302∼5.185µm, Dₘₐₓ is 15.138µm, bulk density is 2.31∼2.64g/cm³ and Mn% is 71.44∼71.08wt%.

Chemical reactions involved in the present invention preparation method mainly comprise:

6Mn²⁺+6H₂O+O₂→2Mn₃O₄↓+12H⁺

6MnSO₄+6H₂O+O₂+12NH₃→2Mn₃O₄+6(NH₄)₂SO₄

CaO+(NH₄)₂SO₄→CaSO₄+2NH₃↑+H₂O

The spherical trimanganese tetroxide product prepared by the methods of the present invention has properties of small particle size, narrow particle size distribution, pure phase, low impurity content, whose BET specific surface area is less than 1m²/g. Particularly, the spherical trimanganese tetroxide product has properties that D₉₀ is 7.0∼8.5µm, D₁₀ is 2.6∼3.2µm, D₅₀ is 4.0∼5.5µm, Dₘₐₓ is 15.138µm, Mn% is 71.44∼71.08wt%, wherein, contents of impurities K, Na, Ca, Mg, Fe, Cu, Zn, Pb, Cd and so on are very low, and particularly, the weight content of K is less than or equal to 8.4ppm, the weight content of Na is less than or equal to 10.6ppm, the weight content of Ca is less than or equal to 27.0ppm, the weight content of Mg is less than 10.0ppm, and the weight content of Fe is less than or equal to 4.7ppm, specifically, the weight contents of Cu, Zn, Pb and Cd are less than 0.1ppm; therefore, the trimanganese tetroxide product prepared by the methods of the present invention meets the requirements of lithium ion secondary battery manganese cathode materials for high rate charge and discharge performance.

### Brief Description of the Drawings

Figure 1 is a process flow diagram of the method of the present invention;
Figure 2 is a structure schematic diagram of the reaction device used in the preparation methods of the present invention;
Figure 3-a and 3-b are XRD diffraction spectrums of Mn₃O₄ powder prepared in examples 1 and 3 of the present invention;
Figure 4 is a scanning electron micrograph image of Mn₃O₄ powder prepared in example 2 of the present invention;
Figure 5-a, 5-b and 5-c are particle size distribution charts of Mn₃O₄ powder prepared in examples 1-3 of the present invention.

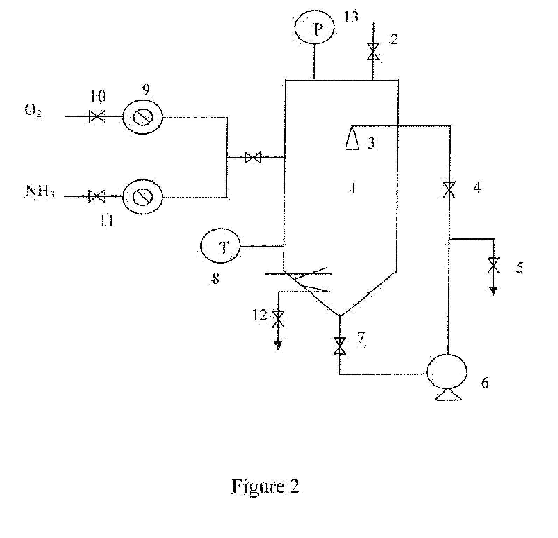

Wherein, meanings of symbols in figure 2 are illustrated as follows:
1- Reactor
2- Atmospheric valve
3- Spray nozzle
4- Regulating valve
5- Opening for sampling
6- Recycle pump
7- Valve
8- Thermometer
9- Flowmeter
10- Oxygen valve
11- Ammonia gas valve
12- Cooling water valve
13- Pressure gauge

### Embodiment

Particularly, spherical trimanganese tetroxide having properties of low BET specific surface area, small particle size and pure phase is prepared by the following methods in the present invention, characterized in that, the methods comprise following processes:

### (1) Pre-treatment process

MnS is added to MnSO₄ solution whose concentration is 130∼200g/L (preferably according to the proportion of 2.5∼3.0 kg of MnS per cubic meter of solution) to carry out reaction (preferably reacting under agitation for 3∼4 hours at 90∼95°C), so as to convert impurity ions of heavy metals in the solution into insoluble sulfides, and then, the mixture is separated by solid-liquid separation and peroxide is added to the obtained filtrate (the peroxide may be barium peroxide or hydrogen peroxide, barium peroxide is added according to the proportion of 1.5∼2.2 kg per cubic meter) to remove impurities with oxidation reaction (preferably keeping the reaction mixture boiling under agitation, more preferably keeping the reaction mixture slightly boiling for 50∼60 minutes, in order to remove impurities such as iron and so on), after that, pH value of the mixture is neutralized to pH5.0∼5.5 and the mixture is separated by solid-liquid separation and manganese sulfate filtrate is obtained;

### (2) Oxidation reaction process

The manganese sulfate filtrate obtained in the process (1) is reacted in a reactor and is sprayed through the spray nozzle of the reactor, the sprayed manganese sulfate filtrate is mixed with a mixture gas of oxygen and ammonia gas introduced into the reactor to carry out reaction on the spraying interface at the pressure range of 500∼1000mm H₂O, and the reaction will not stop until [Mn²⁺]≤1.5g/L in the reaction solution, wherein, the gas mol ratio of oxygen to ammonia gas is O₂/NH₃=1/12, and the manganese sulfate filtrate is cooled (preferably through cooling water) and maintained at a temperature of 25∼30°C to carry out reaction on the spraying interface;

### (3) Process for obtaining the final product

The solution obtained after the reaction in process (2) is separated by solid-liquid separation to obtain solid and filtrate, NH₃ is recovered from the filtrate, the solid is washed with (preferably at a temperature of 70∼80°C) deionized water ( preferably according to the weight ratio of solid to liquid being 1:5), and then Mn₃O₄ product is obtained by drying the solid for 23∼26 hours (preferably 24 hours) at a temperature of 100∼110°C (preferably 105°C).

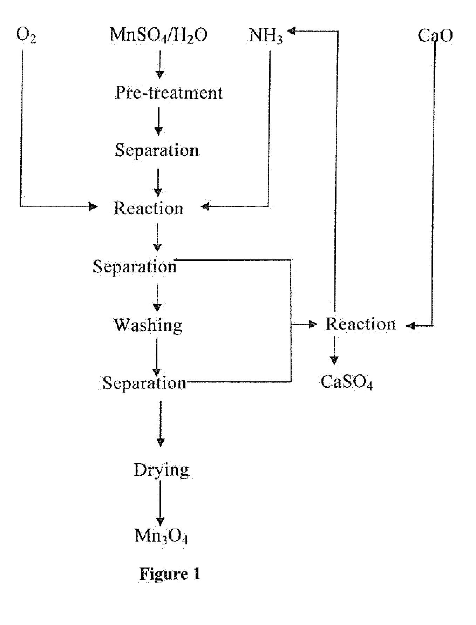

A particular processing method for preparing Mn₃O₄ is illustrated with reference to figure 1 and figure 2. Figure 1 is a process flow diagram of the method of the present invention; figure 2 is a structure schematic diagram of the reaction device used in the preparation method of the present invention.

As shown in figure 1, the method of the present invention for preparing Mn₃O₄ comprises the following processes:

### (1) Pre-treatment process

The concentration of MnSO₄ solution is adjusted to 130∼200 g/L, and MnS is added to the solution according to the proportion of 2.5∼3.0 kg of MnS per cubic meter of solution to carry out reaction under agitation for 3∼4 hours at a temperature of 90∼95°C, so as to convert impurity ions of heavy metals in the solution into insoluble sulfides, and then, the mixture is separated by pressure-filtration to obtain filter and the filter residue, the filer residue is discarded and pH value of the filtrate is adjusted to 2.5∼3.0 with sulfuric acid. Hydrogen peroxide is added according to the proportion of 2.5L of 27.5wt% hydrogen peroxide per cubic meter, the mixture is kept slightly boiling for 50∼60 minutes under agitation and whose pH value is adjusted to 5.0∼5.5 with 2 mol/L Ba(OH)₂ solution, the mixture is separated by pressure-filtration to obtain the filtrate and filter residue, and the filter residue is discarded.

Specifically, chemical reactions involved in the foregoing pre-treatment process mainly comprise:

M+S²⁻→MS (M is a metal ion, may be Zn, Cu, Pb, Cd and so on)

Reaction for removing impurities with H₂O_{2:}

Fe²⁺+ H₂O₂→Fe(OH)₃ ↓ +2H₂O

SO₄²⁻+Ba²⁺→ BaSO₄↓

### (2) Oxidation reaction process

As shown in Figure 2, the above filtrate obtained in the process (1) is placed at the bottom of reactor 1, and the filtrate is cooled to 25∼30°C with pipe coil of the reactor 1. Atmospheric valve 2 is opened, moreover, oxygen valve 10 and ammonia gas valve 11 are opened, and the air in the reactor is replaced with the mixture gas of O₂-NH₃, after which the atmospheric valve 2 is closed. The flow rates of oxygen and ammonia gas are respectively controlled with flowmeters 9 so as to adjust that the gas mol ratio of O₂ to NH₃ is O₂/NH₃=1/12 (so that pH value of the reaction solution may be maintained at 6.4∼ 7.64 during reaction), and reading on the pressure gauge 13 is maintained at a range of 500∼1000 mm H₂O by adjusting gas pressure (the gas pressure is maintained unchanging during the reaction process). After the reaction begins, valve 7 is opened and recycle pump 6 is turned on, the manganese sulfate filtrate obtained in process (1) is discharged through valve 7 via the bottom of reactor 1 and is sprayed through spray nozzle 3 with the help of recycle pump 6, and the spray liquid reacts with the mixture gas of O₂-NH₃ introduced into the reactor. Besides, during the spray reaction process, the reaction temperature is maintained by opening and closing cooling water valve 12 to regulate cooling water so that reading on the thermometer 8 shows the temperature at a range of 25∼30°C. Reaction product sample taken via opening for sampling 5 is analyzed and the reaction will not stop until [Mn²⁺]≤11.5 g/L in the solution, i.e., if the concentration of Mn²⁺ of the solution is [Mn²⁺]>1.5 g/L by analyzing sample taken via opening for sampling 5 during reaction, the manganese sulfate reaction solution discharged through valve 7 should be sprayed circularly.

Chemical reactions involved in the process mainly comprise:

6Mn²⁺+6H₂O+O₂=2Mn₃O₄ ↓ +12H⁺

6MnSO₄+6H₂O+O₂+12NH₃=2Mn₃O₄+6(NH₄)₂SO₄

### (3) Process for obtaining the final product

The solution obtained after reaction in process (2) is separated by pressure-filteration to obtain solid and filtrate, CaO is added into the filtrate to recover NH₃, the solid is washed twice with deionized water whose temperature is 70∼80°C according to the weight ratio of solid to liquid being 1:5. After the solid is washed, Mn₃O₄ product is obtained by drying the solid for 24 hours at 105°C.

Chemical reaction involved in the process mainly comprises:

CaO+(NH4)₂SO₄→CaSO₄ ↓ +NH₃↑

### Examples

First of all, determination devices and determination methods which are used for analyze the properties of Mn₃O₄ powder prepared in the following examples are illustrated as follows:
Device for analyzing the morphology of samples: JSM-6490LV type Scanning Electron Microscopy, manufactured by Japan Electronics Company;
Device for XRD determination: Rigaku D/max-IIIC type, manufactured by Rigaku Corporation;
Method for elements analysis: Inductively Coupled Plasma (ICP) Atomic Emission Spectrometry is used to determine the content of each element;
Device for element analysis: IRIS Intrepid II XSP type Inductively Coupled Plasma Atomic Emission Spectrometer, manufactured by Thermo Electron Corporation in America;
Method for analyzing particle size: Volume average particle diameter is determined by wet laser method;
Device for analyszing particle size: 2000MU type Particle Size Analyzer, manufactured by Malvern Instruments Ltd in England;
Device for determination BET specific surface area: NOVA 1000e type Specific Surface Area Meter, manufactured by Quantachrome Inc. in America;
Device for determination pH value: PHS-3C type precise acidimeter, manufactured by Shanghai Precision Instrument Co. Ltd.

### Example 1

### (1) Pre-treatment process for manganese sulfate solution

The concentration of 100 m³ of MnSO₄ solution was adjusted to 130 g/L, and MnS was added to the solution according to the proportion of 2.5 kg of MnS per cubic meter of solution to carry out reaction under agitation for 3 hours at a temperature of 90°C, so as to convert impurity ions of heavy metals in the solution into insoluble sulfides, and then, the mixture is separated by pressure-filtration to obtain filter and the filer residue, the filter residue was discarded and pH value of the filtrate was adjusted to 2.5∼3.0 with sulfuric acid. Hydrogen peroxide was added according to the proportion of 2.5L of 27.5wt% hydrogen peroxide per cubic meter, the mixture was kept slightly boiling for 50 minutes under agitation and whose pH value is adjusted to 5.0 with 2 mol/L Ba(OH)₂ solution , the mixture is pressure-filtration to obtain the filtrate and filter residue, and the filter residue was discarded.

### (2) Oxidation reaction process

The above filtrate obtained in the process (1) was placed at the bottom of reactor 1 and the filtrate is cooled to 25∼26°C with pipe coil of the reactor 1, atmospheric valve 2 was opened, moreover, oxygen valve 10 and ammonia gas valve 11 were opened, and the air in the reactor is replaced with the mixture gas of O₂-NH₃, after which atmospheric valve 2 was closed. The flow rates of oxygen and ammonia gas were respectively controlled with flowmeters 9 so as to adjust that the gas mol ratio of O₂ to NH₃ is O₂/NH₃=1/12, and reading on the pressure gauge 13 was maintained at a range of 500∼ 800 mm H₂O by adjusting gas pressure (the gas pressure is maintained unchanging during the reaction process). After the reaction began, valve 7 was opened and recycle pump 6 was turned on, the manganese sulfate filtrate obtained in process (1) was discharged through valve 7 via the bottom of reactor 1, and was sprayed through spray nozzle 3 with the help of recycle pump 6, and the spray liquid reacted with the mixture gas of O₂-NH₃ introduced into the reactor. Besides, during the spray reaction process, the reaction temperature is maintained by opening and closing cooling water valve 12 to regulate cooling water so that reading on the thermometer 8 showed the temperature at a range of 25∼26°C. Reaction product sample taken via opening for sampling 5 was analyzed and the reaction stopped when [Mn²⁺] ≤ 1.5 g/L in the solution, during reaction, if the concentration of Mn²⁺ of the solution is [Mn²⁺]> 1.5 g/L in the solution by analyzing sample taken via opening for sampling 5, the manganese sulfate reaction solution discharged through valve 7 should be sprayed circularly.

### (3) Process for obtaining the final product

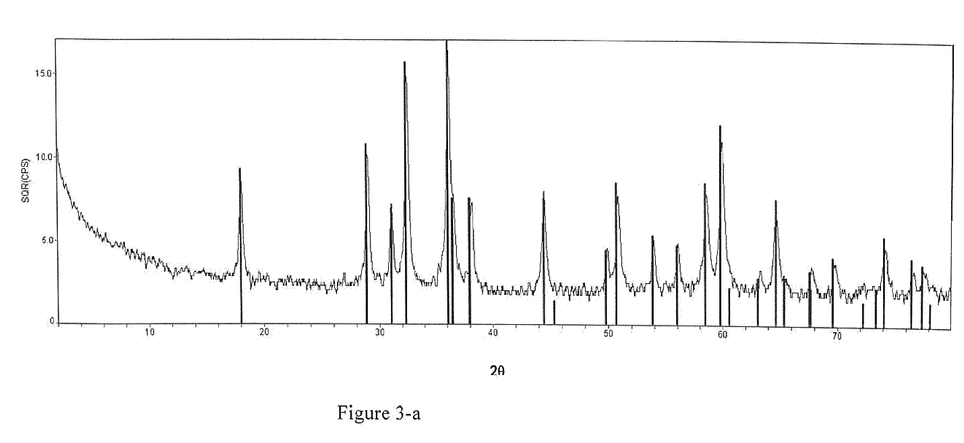

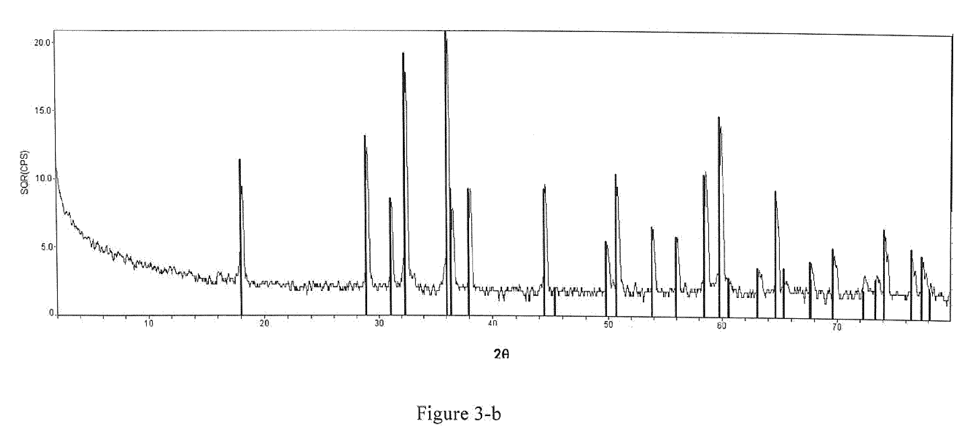

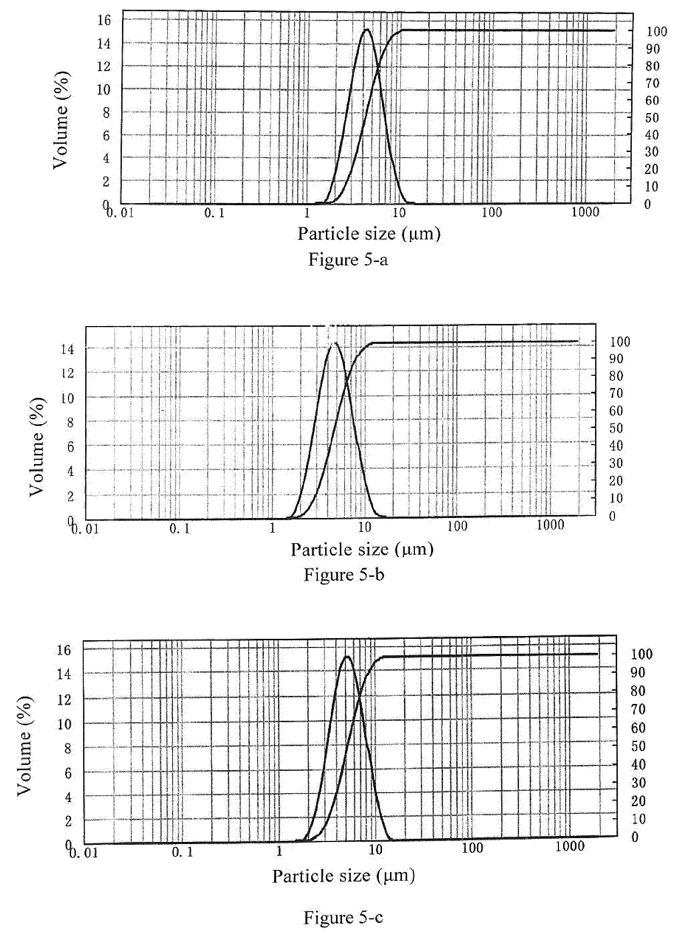

The solution obtained after reaction in process (2) is separated by pressure-filteration to obtain solid and filtrate, CaO was added into the filtrate to recover NH₃, the solid was washed twice with deionized water whose temperature is 70°C according to the weight ratio of solid to liquid being 1:5. After the solid is washed, Mn₃O₄ product sample 1^{#} is obtained by drying the solid for 24 hours at 105°C. As is shown in its XRD diffraction spectrum of figure 3-a, the Mn₃O₄ product sample doesn't contain any impurity phase, peaks in the XRD diffraction spectrum are narrow and the strength of the peaks are high, which indicates crystal structure of the Mn₃O₄ product sample is complete, defect existing in the crystal structure is little and impurity phase of manganites is not contained basically. As is further shown from particle size distribution chart of figure 5-a, the Mn₃O₄ product sample is small particle and whose particle size distribution is narrow, and the particular data of particle size distribution is shown in table 1.

### Example 2

### (1) Pre-treatment process for manganese sulfate solution

The concentration of 100 m³ of MnSO₄ solution was adjusted to 170 g/L, and MnS was added to the solution according to the proportion of 3.0 kg of MnS per cubic meter of solution to carry out reaction under agitation for 4 hours at a temperature of 95°C, so as to convert impurity ions of heavy metals in the solution into insoluble sulfides, and then, the mixture is separated by pressure-filtration to obtain filter and the filer residue, the filter residue was discarded and pH value of the filtrate was adjusted to 2.5~3.0 with sulfuric acid. Hydrogen peroxide was added according to the proportion of 2.5L of 27.5wt% hydrogen peroxide per cubic meter, the mixture was kept slightly boiling for 60 minutes under agitation and whose pH value is adjusted to 5.5 with 2 mol/L Ba(OH)₂ solution, the mixture is separated by pressure-filtration to obtain the filtrate and filter residue, and the filter residue was discarded.

### (2) Oxidation reaction process

The above filtrate obtained in the process (1) was placed at the bottom of reactor 1 and the filtrate is cooled to 27∼28°C with pipe coil of the reactor 1, atmospheric valve 2 was opened, moreover, oxygen valve 10 and ammonia gas valve 11 were opened, and the air in the reactor is replace with the mixture gas of O₂-NH₃, after which atmospheric valve 2 was closed. The flow rates of oxygen and ammonia gas were respectively controlled with flowmeters 9 so as to adjust that the gas mol ratio of O₂ to NH₃ is O₂/NH₃=1/12, and reading on the pressure gauge 13 was maintained at a range of 800∼1000 mm H₂O by adjusting gas pressure (the gas pressure is maintained unchanging during the reaction process). After the reaction began, valve 7 was opened and recycle pump 6 was turned on, the manganese sulfate filtrate obtained in process (1) was discharged through valve 7 via the bottom of reactor 1, and was sprayed through spray nozzle 3 with help of recycle pump 6, and the spray liquid reacts with the mixture gas of O₂-NH₃ introduced into the reactor. Besides, during the spray reaction process, the reaction temperature is maintained by opening and closing cooling water valve 12 to regulate cooling water so that reading on the thermometer 8 showed the temperature at a range of 27∼28°C. Reaction product sample taken via opening for sampling 5 was analyzed and the reaction stopped when [Mn²⁺]≤ 1.5 g/L in the solution, if the concentration of Mn²⁺ of the solution is [Mn²⁺] > 1.5 g/L in the solution by analyzing sample taken via opening for sampling 5 during reaction, the manganese sulfate reaction solution discharged through valve 7 should be sprayed circularly.

### (3) Process for obtaining the final product

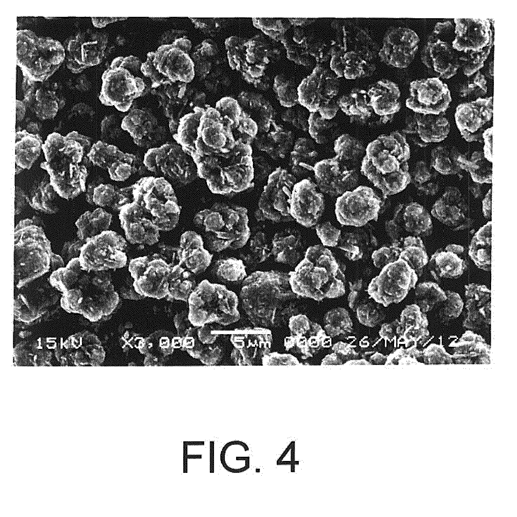

The solution obtained after reaction in process (2) is separated by pressure-filteration to obtain solid and filtrate, CaO was added into the filtrate to recover NH₃, the solid was washed twice with deionized water whose temperature is 80°C according to the weight ratio of solid to liquid being 1:5. After the solid is washed, Mn₃O₄ product sample 2^{#} is obtained by drying the solid for 23 hours at 110°C. As is shown in scanning electron micrograph image of figure 4, the particle of Mn₃O₄ sample is subsphaeroidal and the particle size distribution is uniform. As is further shown from particle size distribution chart of figure 5-b, the Mn₃O₄ product sample is small particle and whose particle size distribution is narrow, and the particular data of particle size distribution is shown in table 1.

### Example 3

### (1) Pre-treatment process for manganese sulfate solution

The concentration of 100 m³ of MnSO₄ solution was adjusted to 200 g/L, and MnS was added to the solution according to the proportion of 2.8 kg of MnS per cubic meter of solution to carry out reaction under agitation for 4 hours at 93°C, so as to convert impurity ions of heavy metals in the solution into insoluble sulfides, and then, the mixture is separated by pressure-filtration to obtain filter and the filer residue, the filter residue was discarded and pH value of filtrate was adjusted to 2.5∼3.0 with sulfuric acid. Hydrogen peroxide was added in according to the proportion of 2.5L of 27.5wt% hydrogen peroxide per cubic meter, the mixture was kept slightly boiling for 55 minutes under agitation and whose pH value is adjusted to 5.3 with 2 mol/L Ba(OH)₂ solution, the mixture is separated by pressure-filtration to obtain the filtrate and filter residue, and filter residue was discarded.

### (2) Oxidation reaction process

The above filtrate obtained in the process (1) was placed at the bottom of reactor 1 and the filtrate is cooled to 28∼30°C with pipe coil of the reactor 1, atmospheric valve 2 was opened, moreover, oxygen valve 10 and ammonia gas valve 11 were opened, and the air in the reactor is replaced with the mixture gas of O₂-NH₃, after which atmospheric valve 2 was closed. The flow rates of oxygen and ammonia gas were respectively controlled with flowmeters 9 so as to adjust that the gas mol ratio of O₂ to NH₃ is O₂/NH3=1/12, and reading on the pressure gauge 13 was maintained at a range of 600∼ 800 mm H₂O by adjusting gas pressure (the gas pressure is maintained unchanging during the reaction process). After the reaction began, valve 7 was opened and recycle pump 6 was turned on, the manganese sulfate filtrate obtained in process (1) was discharged through valve 7 via the bottom of reactor 1, and was sprayed through spray nozzle 3 with the help of recycle pump 6, and the spray liquid reacted with the mixture gas of O₂-NH₃ introduced into the reactor. Besides, during the spray reaction process, the reaction temperature is maintained by opening and closing cooling water valve 12 to regulate cooling water so that reading on the thermometer 8 showed the temperature at a range of 28∼30°C. Reaction product sample taken via opening for sampling 5 was analyzed and the reaction stopped when [Mn²⁺] ≤ 1.5 g/L in the solution, during reaction, if the concentration of Mn²⁺ of the solution is [Mn²⁺] > 1.5 g/L in the solution by analyzing sample taken via opening for sampling 5, the manganese sulfate reaction solution discharged through valve 7 should be sprayed circularly.

### (3) Finished product process

The solution obtained after reaction in process (2) is separated by pressure-filteration to obtain solid and filtrate, CaO was added into the filtrate to recover NH₃, the solid was washed twice with deionized water of whose temperature is 75°C according to weight ratio of solid to liquid being 1:5. After the solid is washed, Mn₃O₄ product sample 3^{#} is obtained by drying the solid for 24 hours at 105°C. As is shown in its XRD diffraction spectrum of figure 3-b, the Mn₃O₄ product sample doesn't contain any impurity phase, the peaks in the XRD diffraction spectrum are narrow and the strength of the peaks are high, which indicates crystal structure of the Mn₃O₄ product sample is complete, defect existing in the crystal structure is little and impurity phase of manganites is not contained basically. As is further shown from particle size distribution chart of figure 5-c, the Mn₃O₄ product sample is small particle and whose particle size distribution is narrow, and the particular data of particle size distribution is shown in table 1.

Besides, data of analysis for elements content, particle diameter, bulk density and BET specific surface area of Mn₃O₄ samples 1^{#}∼3^{#} obtained in examples 1∼3 are shown in following table 1.

**Table 1 Determination results of physical properties of Mn₃O₄ samples 1^{#}∼3^{#}**

| | 1^{#} | 2^{#} | 3^{#} |
|---|---|---|---|
| Mn % | 71.44 | 71.21 | 71.08 |
| K ppm | 7.3 | 7.7 | 8.4 |
| Na ppm | 8.4 | 10.0 | 10.6 |
| Ca ppm | 18.6 | 24.1 | 27.0 |
| Mg ppm | <10.0 | <10.0 | <10.0 |
| Fe ppm | 4.7 | 4.3 | 3.2 |
| Cu ppm | <0.1 | <0.1 | <0.1 |
| Zn ppm | <0.1 | <0.1 | <0.1 |
| Pb ppm | <0.1 | <0.1 | <0.1 |
| Cd ppm | <0.1 | <0.1 | <0.1 |
| D₁₀ µm | 2.626 | 2.807 | 3.139 |
| D₅₀ µm | 4.302 | 4.751 | 5.185 |
| D₉₀ µm | 7.029 | 8.018 | 8.456 |
| Dmax | 13.183 | 15.138 | 13.183 |
| Bulk density g/cm³ | 2.31 | 2.55 | 2.64 |
| BET m²/g | 0.8214 | 0.8007 | 0.7122 |

As it can be seen from Table 1, content of Mn in Mn₃O₄ particle prepared by the method of the present invention is higher, Mn% is 71.44-71.08 wt%; besides, contents of impurities are very low, and contents of impurities K, Na, Ca, Mg, Fe, Cu, Zn, Pb and Cd are very low, wherein, content of K is less than or equal to 8.4ppm, content of Na is less than or equal to 10.6ppm, content of Ca is less than or equal to 27.0ppm, content of Mg is less than 10.0ppm, content of Fe is less than or equal to 4.7ppm, specially, contents of Cu, Zn, Pb and Cd are all respectively less than 0.1ppm. In addition, particle diameter of Mn₃0₄ particle is small, BET specific surface area of Mn₃O₄ particle is low and is less than 1m²/g, D₉₀ of Mn₃O₄ particle is 7.0∼8.5µm, D₁₀ of Mn₃O₄ particle is 2.6∼3.2µm, D₅₀ of Mn₃O₄ particle is 4.0∼5.5µm, and Dₘₐₓ of Mn₃O₄ particle is 15.138µm. Particularly, BET specific surface area of samples 1^{#}∼3^{#} is 0.7122~0.8214m²/g, D₉₀ of samples 1^{#}∼3^{#} is 7.029∼8.456µm, D₁₀ of samples 1^{#}∼3^{#} is 2.626∼3.139µm, D₅₀ of samples 1^{#}∼3^{#} is 4.302∼5.185µm, and bulk density of samples 1^{#}∼3^{#} is 2.31∼2.64g/cm³.

Foregoing data of examples 1∼3 shows that properties ofuch as particle diameter, specific surface area, morphology and so on, meet the requirements for trimanganese tetroxide used for preparation manganese cathode materials for lithium ion secondary battery. The Mn₃O₄ particle prepared by the method of the present invention possess the properties of low impurity content, spherical particle, pure crystalline phase structure, which meets the requirements of manganese cathode materials for high rate charge and discharge performance.

## Claims

1. A method for preparing spherical trimanganese tetroxide, **characterized in that** it comprises following processes:
(1) Pre-treatment process
Adding MnS and peroxide sequentially to MnSO₄ solution whose concentration is 130∼200g/L to remove impurities, and then neutralizing the mixture to pH value of 5.0∼ 5.5, separating the mixture by solid-liquid separation to obtain manganese sulfate filtrate;
(2) Oxidation reaction process
Putting the foregoing manganese sulfate filtrate obtained in the process (1) in a reactor, spraying the filtrate through a nozzle of the reactor so that the sprayed manganese sulfate filtrate is mixed with mixture of oxygen and ammonia gas introduced into the reactor to carry out circular reaction on the spraying interface at the pressure range of 500∼1000mm H₂O and stopping the reaction when the concentration of Mn²⁺ reaches 1.5g/L or less in the reaction solution, wherein the manganese sulfate filtrate is cooled and maintained at a temperature range of 25∼30°C to carry out circular reaction on the spray interface and mol ratio of oxygen to ammonia gas is O₂/NH₃=1/12;
(3) Process for obtaining the final product
Separating the solution obtained after completing reaction in process (2) by solid-liquid separation to obtain solid and filtrate, recovering NH₃ from the filtrate, washing the solid with deionized water, and then drying the solid to obtain Mn₃O₄ product.

2. The method for preparing spherical trimanganese tetroxide according to claim 1, wherein, in process (1), MnS is added to the solution to carry out reaction according to the proportion of 2.5∼3.0 kg of MnS per cubic meter of solution.

3. The method for preparing spherical trimanganese tetroxide according to claim 2, wherein, in process (1), reaction is carried out under agitation for 3∼4 hours at 90∼95°C after adding MnS .

4. The method for preparing spherical trimanganese tetroxide according to claim 1 or 2, wherein, in process (1), when said peroxide is barium peroxide, barium peroxide is added to the solution according to the proportion of 1.5∼2.2 kg per cubic meter of solution and impurities are removed with oxidation reaction under boiling; when said peroxide is hydrogen peroxide, hydrogen peroxide is added to the solution according to 2.5L of 27.5wt% hydrogen peroxide per cubic meter of solution and impurities are removed with oxidation reaction under the condition that the mixture is boiling.

5. The method for preparing spherical trimanganese tetroxide according to any one of claims 1-4, wherein, in process (3), CaO is added to the filtrate to recover NH₃.

6. The method for preparing spherical trimanganese tetroxide according to any one of claims 1-5, wherein, in process (3), the solid is washed with deionized water at a temperature of 70∼80°C according to the weight ratio of solid to liquid of 1:5.

7. The method for preparing spherical trimanganese tetroxide according to any one of claims 1-6, wherein, in process (3), said drying is maintained for 23∼26 hours at a temperature range of 100∼110°C.

8. The method for preparing spherical trimanganese tetroxide according to any one of claims 1-7, wherein, in process (3), said drying is maintained for 24 hours at 105°C.

9. A spherical trimanganese tetroxide product that is prepared by the method according to any one of claims 1-8.

10. The spherical trimanganese tetroxide product according to claim 9, whose BET specific surface area is less than 1m²/g, D₉₀ is 7.0∼8.5µm, D₁₀ is 2.6∼3.2µm, and D₅₀ is 4.0∼5. 5µm.

11. The spherical trimanganese tetroxide product according to claim 9, whose BET specific surface area is 0.7122∼0.8214m²/g, D₉₀ is 7.029∼8.456µm, D₁₀ is 2.626∼ 3.139µm, D₅₀ is 4.302∼5.185µm, Dₘₐₓ is 15.138µm, bulk density is 2.31∼2.64g/cm³, and Mn% is 71.44∼71.08wt%.
